# EUROPEAN PATENT APPLICATION

(11) **EP 3 502 937 A1**
(43) Date of publication of application: **26.06.2019**
(21) Application number: 17209045.8
(22) Date of filing: 20.12.2017
(51) Int. Cl.: G06F 21/31, H04W 12/06

(54) **METHOD FOR VISUALLY CAPTURING A CODE FOR LOCKING OR UNLOCKING OF FUNCTIONS**

(71) Applicant: Vestel Elektronik Sanayi ve Ticaret A.S., 45030 Manisa (TR)
(72) Inventor: CUBUKCU, Baran, 45030 Manisa (TR)
(74) Representative: Ascherl, Andreas

(57) **Abstract**

The present invention refers to a method for locking or unlocking of at least one function of an electric device (1), in particularly a mobile device like a smart phone or a tablet pc. This method at least comprises the steps:
activating a camera (4) of the device (1), capturing a scene with the camera (4), darken the scene in a sequence, analyzing if the captured sequence matches with a pre-defined sequence or a predefined code, wherein the pre-defined sequence or predefined code is stored in a data storage means of the device (1), locking or unlocking the at least one function of the device (1).

## Description

The present invention refers according to claim 1 to a method for unlocking or locking of at least one function of a mobile device and according to claim 13 to a computer program product for executing such a method.

### Background of the invention

The present invention is related to consumer electronics and the invention can be applied to all types of smart devices that have camera on it. Cameras are very common especially in mobile phones and tablets and such devices have individual information in it. Securing those data may be possible with commonly known pin codes, fingerprint detection and etc., however, as another method it can be done via camera e.g. in case people have any difficulty by using current methods.

### Object of the invention

It is the object of the invention to provide an alternative identification method, in particularly for accessing or locking of electronic devices.

### Description of the invention

The before mentioned object is solved by a method according to claim 1 for locking or unlocking of at least one function of an electronic device, in particularly a mobile device like a smart phone or a tablet PC. The method according to the invention preferably comprises at least the steps: activating a camera of the mobile device, capturing a scene with the camera, darken the scene in a sequence, analyzing if the captured sequence matches with a pre-defined sequence or a predefined code, wherein the pre-defined sequence or predefined code is stored in a data storage means of the mobile device, locking or unlocking the at least one function of the mobile device in dependency of the analyzed data respectively the results of the analysis.

This solution is beneficial since the camera can be used to enter a code. The code can be used to identify a person, to start or end an application/function or to unlock or lock a screen or a feature or a function or an application.

Thus, the proposed invention uses at least or exactly one camera as a coding device. The functionality of the invention will enable the device to opening/unlock some applications/functions in much faster way and/or to close/lock applications/functions in much faster way. Preferably one or more than one function or application can be unlocked or locked according to the present invention. The function/s or application/s is/are preferably predefined. Thus, a function for unlocking/locking or opening/closing is provided, wherein the function accesses a database, wherein the necessary code and/or parameters are stored in said database. Thus, in case a user touches the camera in a specific sequence the function checks if this sequence is defined in the database. In case the sequence is referenced or stored in the database unlocking/locking or opening/closing of a predefined application/function is triggered. The predefined function/application is preferably linked to the database or defined in said database. The invention is related with consumer electronics and it can be applied to all consumer devices that have built in camera on it, in particularly mobile devices like smart phones or tablet PC.

Further preferred embodiments of the present invention are subject-matter of the following specification parts and/or of the dependent claims.

According to a preferred embodiment of the present invention the sequence comprises a plurality of inputs, wherein the inputs represent at least: darkening, long darkening, not-darkening and long not-darkening, wherein darkening defines darkening the scene for a first darkening time interval, wherein long darkening defines darkening the scene for a second darkening time interval, wherein the first darkening time interval is shorter than the second darkening time interval, wherein not-darkening defines that the scene is not darkened for a first not-darkening time interval, wherein long-not darkening defines that the scene is not darkened for a second not-darkening time interval, wherein the first not-darkening time interval is shorter than the second not darkening time interval. This embodiment is beneficial since four different inputs allow a high complexity even of short codes. The code length is preferably longer than 3 inputs, in particularly longer or up to 4 inputs or longer or up to 5 inputs or longer or up to 6 inputs or longer or up to 7 inputs or longer or up to 10 inputs. Darkening can be understood as pressing or touching or any other action that limits light reaching the camera.

According to a further preferred embodiment of the present invention the first darkening time interval has the same length as the first not-darkening time interval and/or the second darkening time interval has the same length as the second not-darkening time interval. This embodiment is beneficial since the user can easily understand the coding and can therefore use the present invention without high adapting requirements.

The input darkening represents according to a further preferred embodiment of the present invention a code 1, the input long darkening preferably represents a code 11, the input not-darkening preferably represents a code 0, and the input long not-darkening preferably represents a code 00, wherein the predefined code represents a binary code generated by combinations of the inputs. This embodiment is beneficial since the binary code does not require much data storage. Thus, the code can be processed very fast and therefore the usability respectively unlocking/locking is caused in a very convenient manner.

The camera is activated according to a further preferred embodiment in response to a triggering event, wherein the triggering event comprises an acoustic and/or haptic interaction with the mobile device, wherein the acoustic interaction is carried out by a speech analysis, in particularly via a microphone of the device, wherein acoustic commands of a user and/or the voice of a user is/are analyzed, wherein the haptic interaction is carried out by analyzing movements of the device by means of at least one acceleration sensor of the mobile device and/or by means of pressing a button and/or by means of touching a sensor. The device preferably comprises a frontside and a backside, wherein the frontside comprises a screen and wherein a lens of the camera is arranged as part of the backside. It is possible that the device further comprises a front side camera. The lens of the backside camera is preferably arranged beside a touch sensor or the lens is preferably covered by the touch sensor for triggering activating of the camera. This embodiment is beneficial since the camera can be activated in fast manner, thus the user preferably does not have to interact long time with the device to start the camera.

A light respectively light source arranged beside the camera and/or at the backside of the device is according to a further preferred embodiment of the present invention turned on in response to the triggering event. Additionally or alternatively the light or light source can be turned on in response to a light sensor of the device, wherein the light sensor is preferably arranged on the front side of the device. Beside preferably means closer than 5cm or closer than 3cm or closer than 2cm. This embodiment is beneficial since the method according to the present invention can also be used in dark environments. In particularly during the night, in dark rooms or in a back or in a pants pocket of the user. Thus, the invention will further increase the protection of codes in banking issues. The invention can even be used for bank applications. Transferring money or such issues need user's confirmation by entering the pin code and etc. but entered codes can be seen by the people around. Touching / not touching camera moments may not be caught easily by people around. What's more secure, since there is no need to look at the device and the person can do the coding system even in his/her pocket to not let anyone see what the code is.

According to another embodiment of the present invention a further identification is carried out, wherein the further identification does not utilize the camera, wherein the further identification is caused by a further identification means of the mobile device. Locking or unlocking is preferably caused in case the captured sequence matches with the pre-defined sequence or the predefined code and in case the further identification outputs data or signals representing a valid identification. This embodiment is beneficial since such two or multiple factor authentication is much safer compared to just a one factor authentication.

The further identification means is according to a further preferred embodiment a finger print sensor, a pin code detection means, a voice analyzing means, a face detecting and/or tracking means or a heartrate tracker means. This embodiment is beneficial since such identification means are well understood and widespread, thus combining one or multiple of them with the inventive method can be carried out easily. Thus, a lot of devices can be upgraded to a much safer two factor authentication, which incorporated the present invention.

The camera is according to a further embodiment of the present invention haptically distinguishably from the surrounding sections of the backside of the mobile device. The camera preferably project from the backside of the device or from the surrounding surface and can be identified easily. Thus, the proposed invention will make life easier for blind person, in particularly since the position of the camera can be identified easily. However, even in case the camera does not project from the backside or surrounding parts of the camera its position can be learned easily since it stays the same for the individual device.

The above-mentioned object is also solved by a computer program product according to claim 13 for executing a method according to any of the preceding claims.

Further benefits, goals and features of the present invention will be described by the following specification of the attached figures, in which exemplarily components of the invention are illustrated. Components of the devices, units and methods according to the invention, which match at least essentially with respect to their function can be marked with the same reference sign, wherein such components do not have to be marked or described multiple times with respect to said figures. In the following the invention is just exemplarily described with respect to the attached figures.

### BRIEF DESCRIPTION OF THE DRAWINGS

- Fig. 1: shows a camera of a mobile device, wherein the camera is switched on and
- Fig. 2: shows the camera of fig. 1, wherein the camera is darkened by a finger of the user.

### DETAILED DESCRIPTION OF THE DRAWINGS

The proposed system is aiming enabling or disabling some functionalities in much faster way. In order to do this, a camera 4 is used that is built on electric devices 1.

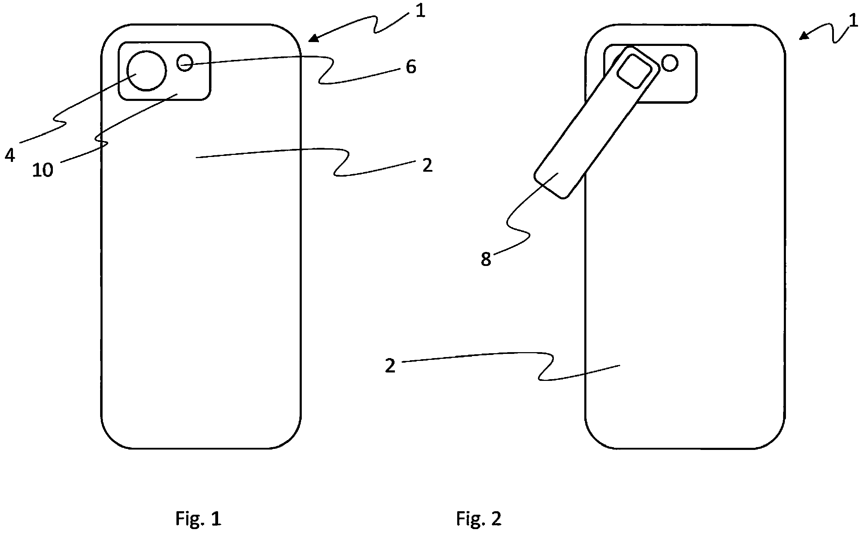

Fig. 1 shows a backside 2 of an electronic device 1. The backside 2 further comprises a camera 4. It is additionally possible that the backside further comprises a light source 6 and/or a touch sensor 10.

The camera 4 is normally inactive and not be used for any operation before enabling it from the device's menu. But, it's proposed by the present invention to enable camera 4 easily and use it as coding mechanism. This is preferably executed according to the following steps:
A person enables camera 4 by pressing on it or by touching the main screen of the device 1. For example, clicking on camera 4 can enable camera 4 if it has touch sensors 10 also placed on it or beside the camera 4 or by touching the front screen multiple times, in particularly 3 times (as an example), may enable the camera 4 respectively camera device 4 to be active only for coding functionality.

After the camera 4 is enabled respectively activated, person will enter some codes by touching onto the camera 4 respectively by darkening the camera 4. Such a scenario is shown in fig. 2, wherein a finger 8 of a user darkens the camera 4. When camera 4 is not touched, it'll capture light respectively the environment and once the camera 4 is touched respectively darkened it will capture less light or no light or just a black environment because the finger will cover it.

Not pressed moments will be preferably be coded as "0" and pressed moments will be preferably be coded as "1" in 1-0 binary coding system (it may be even vice versa). Long presses can be "11" and long not pressed moments will be "00", respectively vice versa.

For example, unlocking the device 1, in particularly a phone, will be determined as 10101 by end user and if user enters that code by pressing and not pressing on camera 4 in correct order (for above example the correct order will be: pressing - not pressing - pressing - not pressing - pressing) then the device 1 or function or application will be unlocked.

A person, in particularly user, can assign some other codes for opening some applications like SMS application, calling someone, asking for urgent help in case there is emergency situation and etc.

The invention will also be useful for parents; if any parent gives his/her phone to a his/her child, then s/he can lock some applications of the device by touching on the camera 4 in a predefined code like 11011 (long touch - no touch - long touch). By the way, calling someone, sending message to someone, connectivity features of the phone or purchasing an application may be disabled. The code "touch - touch" can be understood as "long touch", thus the camera 4 is preferably constantly darkened in that case.

The invention will also be valuable for blind people. By touching on camera 4, it can be assigned some codes and by the way blind people can use the device much faster and easier.

Thus, the present invention refers to a method for locking or unlocking of at least one function of an electric device 1, in particularly a mobile device like a smart phone or a tablet pc. This method at least comprises the steps: activating a camera 4 of the device 1, capturing a scene with the camera 4, darken the scene in a sequence, analyzing if the captured sequence matches with a pre-defined sequence or a predefined code, wherein the pre-defined sequence or predefined code is stored in a data storage means of the device 1, locking or unlocking the at least one function of the device 1.

### List of reference numbers

- 1: device
- 2: backside
- 4: camera
- 6: light source
- 8: finger
- 10: touch sensor

## Claims

1. Method for locking or unlocking of at least one function of an electric device (1), in particularly a mobile device like a smart phone or a tablet PC,
at least comprising the steps:
activating a camera (4) of the device (1),
capturing a scene with the camera (4),
darken the scene in a sequence,
analyzing if the captured sequence matches with a pre-defined sequence or a predefined code, wherein the pre-defined sequence or predefined code is stored in a data storage means of the device (1),
locking or unlocking the at least one function of the device (1) in dependency of the analyzed data.

2. Method according to claim 1,
**characterized in that**
the sequence comprises a plurality of inputs,
wherein the inputs represent at least:
darkening,
long darkening,
not-darkening and
long not-darkening,
wherein darkening defines darkening the scene for a first darkening time interval,
wherein long darkening defines darkening the scene for a second darkening time interval,
wherein the first darkening time interval is shorter than the second darkening time interval,
wherein not-darkening defines that the scene is not darkened for a first not-darkening time interval,
wherein long-not darkening defines that the scene is not darkened for a second not-darkening time interval,
wherein the first not-darkening time interval is shorter than the second not darkening time interval.

3. Method according to claim 2,
**characterized in that**
the first darkening time interval has the same length as the first not-darkening time interval and/or
the second darkening time interval has the same length as the second not-darkening time interval.

4. Method according to claim 2 or 3,
**characterized in that**
the input darkening represents a code 1,
the input long darkening represents a code 11,
the input not-darkening represents a code 0, and
the input long not-darkening represents a code 00,
wherein the predefined code represents a binary code generated by combinations of the inputs.

5. Method according to claim 1,
**characterized in that**
the camera (4) is activated in response to a triggering event,
wherein the triggering event comprises an acoustic and/or haptic interaction with the device (1),
wherein the acoustic interaction is carried out by a speech analysis, wherein acoustic commands of a user and/or the voice of a user are analyzed,
wherein the haptic interaction is carried out by analyzing movements of the device (1) by means of at least one acceleration sensor of the mobile device and/or by means of pressing a button and/or by means of touching a sensor (10).

6. Method according to claim 5,
**characterized in that**
the device (1) comprises a frontside and a backside (2), wherein the frontside comprises a screen and wherein a lens of the camera (4) is arranged as part of the backside (2).

7. Method according to claim 6
**characterized in that**
the lens is arranged beside a touch sensor (10).

8. Method according to claim 6,
**characterized in that**
the lens is covered by the touch sensor (10) for triggering activating of the camera.

9. Method according to claim 5 to 8,
**characterized in that**
a light arranged beside the camera (4) is turned on in response to the triggering event and/or in response to a light sensor of the device.

10. Method according to any of the preceding claims,
**characterized in that**
a further identification not utilizing the camera (4) is carried out by a further identification means of the mobile device (1),
wherein locking or unlocking is caused in case the captured sequence matches with the pre-defined sequence or the predefined code and in case the further identification outputs data or signals representing a valid identification.

11. Method according to claim 10,
**characterized in that**
the further identification means is a finger print sensor, a pin code detection means, a voice analyzing means, a face detecting and/or tracking means or a heartrate tracker means.

12. Method according to any of the preceding claims,
**characterized in that**
the camera (4) is haptically distinguishably from the surrounding sections of the backside of the mobile device (1).

13. Computer program product for executing a method according to any of the preceding claims.
